# EUROPEAN PATENT APPLICATION

(11) **EP 2 407 974 A1**
(43) Date of publication of application: **18.01.2012**
(21) Application number: 10750556.2
(22) Date of filing: 09.03.2010
(51) Int. Cl.: G11B 31/00, G11B 17/056

(54) **ELECTRONIC DEVICE AND OPTICAL DISK PLAYBACK DEVICE THAT ARE ABLE TO BE CONNECTED TO AN EXTERNAL DEVICE**

(30) Priority: 09.03.2009 JP 2009054534
(71) Applicant: Panasonic Corporation, Kadoma-shi Osaka 571-8501 (JP)
(72) Inventor: SUZUKI, Yousuke, Chuo-ku, Osaka-shi, Osaka 540-6207 (JP); YANO, Takashi, Chuo-ku, Osaka-shi, Osaka 540-6207 (JP)
(74) Representative: Eisenführ, Speiser & Partner
(86) International application number: PCT/JP2010/001644
(87) International publication number: WO 2010/103799

(57) **Abstract**

An electronic device (e.g. an optical disk reproducing apparatus) can be connected to an external apparatus (e.g. a display apparatus) and has a standby state as a power state. The electronic device includes a movable member (e.g. a disk tray) (191) which is provided to be ejectable from and retractable into a body of the electronic device and be movable between an ejected position and a retracted position; a driver (10) which drives the movable member, a detector (193) which detects whether the movable member is at the retracted position, a communication unit which receives various control signals from the external apparatus, a power controller (14) which controls the power state of the electronic device, a controller (14) which controls the driver to locate the movable member to the retracted position when the power state of the electronic device is changed to the standby state by the power controller. The power controller (14) controls whether to change the power state to the standby state according to a result of the detection by the detector, when the communication unit receives a predetermined control signal.

## Description

### Technical Field

The present invention relates to an electronic device (e.g., an optical disk reproducing apparatus) connectable to an external apparatus (e.g., a display apparatus). More particularly, the present invention relates to an electronic device capable of receiving control signals from an external apparatus.

### Background Art

Patent Document 1 discloses a video reproducing apparatus capable of reproducing an optical disk. The video reproducing apparatus is configured to be connectable to a video display apparatus (e.g., a TV) through an HDMI (High-Definition Multimedia Interface) cable, and can transmit and receive control signals to/from the video display apparatus.

Non-Patent Document 1 describes examples of such control signals. Non-Patent Document 1 discloses, for example, as an example of the control signal, a signal (hereinafter, referred to as a "TV input switching signal") for switching an external input of a TV from an input (hereinafter, referred to as an "HDMI input") of a device connected to an HDMI terminal to an input (hereinafter, referred to as an "antenna input") of an antenna terminal.

Such a control signal is used, for example, as follows. A TV and a player are connected to each other by an HDMI cable. During a reproduction operation, the player reproduces a video signal on an optical disk stored in the player and outputs the video signal to the TV through the HDMI cable. In this state, when the reproduction process is stopped by a user instruction provided to the player, the player transmits a TV input switching signal to the TV. When the TV receives the TV input switching signal from the player, the TV switches an external input from an HDMI input to an antenna input.

In addition, Non-Patent Document 1 discloses, as another example, a control signal for controlling power state of all devices connected to HDMI terminals of the TV to a standby state in which power is supplied only to some of all circuits for power saving. The control signal is transmitted (broadcast) to the devices connected to all of the HDMI terminals and thus is hereinafter referred to as a "standby (broadcast) signal".

Non-Patent Document 1 describes, as still another example, a control signal for setting the power state of a device connected to a specific HDMI terminal in a standby state. The control signal is transmitted (unicast) only to the device connected to the specific HDMI terminal and thus is hereinafter referred to as a "standby (unicast) signal".

In general, a video reproducing apparatus has a disk drive unit which stores an optical disk therein. The disk drive unit is configured to eject or retract a disk tray on which an optical disk is placed from or into a body of the apparatus in response to a user operation.

### Prior-Art Documents

### Patent Documents

Patent Document 1: JP-2007-274296-A

### Non-Patent Documents

Non-Patent Document 1_{:} HDMI Specification 1.3a (CEC Supplement Section)

### Disclosure of Invention

### Problems to be Solved by the Invention

For a conventional video reproducing apparatus as described above, there is one apparatus operating, for example, as follows, cooperating with a display apparatus connected thereto.

A video reproducing apparatus can receive a predetermined control signal from a display apparatus to which the video reproducing apparatus is connected. When the video reproducing apparatus receives, as the predetermined control signal, a standby signal for switching its power state from an ON state to a standby state, from the display apparatus with a disk tray ejected from a body of the video reproducing apparatus (disk tray open state), the video reproducing apparatus stops supply of power to each of units in the video reproducing apparatus. At that time, since the disk tray does not need to be left ejected from the body, the video reproducing apparatus instructs a disk drive to retract the disk tray, and thereafter, stops supply of power to the disk drive. The video reproducing apparatus that performs such operations has the following problem.

When a user changes an optical disk, the user opens the disk tray of the video reproducing apparatus and then places the optical disk on the disk tray. When, during such an operation, a standby signal is transmitted to the video reproducing apparatus from the display apparatus, the video reproducing apparatus retracts the disk tray in the apparatus body in response to the standby signal. In this case, even before the user finishes the operation of changing the optical disk, the disk tray is forcefully retracted in the apparatus body, and accordingly, the user may not be able to continue the changing operation.

If the disk tray is thus retracted in the apparatus body on the initiative of the recording and reproducing apparatus side during the changing of a disk by the user, the user cannot continue his/her intended operation, which may cause a situation in which user convenience is impaired.

The present invention is made to solve the above-described problem, and thus has an object to provide an electronic device (e.g., an optical disk reproducing apparatus) that can be controlled based on control signals from an external apparatus (e.g., a display apparatus) and that performs, when receiving a predetermined control signal from the external apparatus, operations according to the control signal without impairing user convenience.

### Means for Solving the Problems

According to a first aspect of the present invention, an electronic device is provided, which is connectable to an external apparatus and has, as a power state, a standby state in which power is supplied only to part of all circuits for power saving. The electronic device includes: a movable member that is provided to be ejectable from and retractable into a body of the electronic device and be movable between an ejected position and a retracted position; a driver that drives the movable member; a detector that detects whether the movable member is at the retracted position; a communication unit that receives various control signals from the external apparatus; a power controller that controls a power state of the electric device; and a controller that controls the driver to locate the movable member at the retracted position when the power state of the electronic device is changed to the standby state by the power controller. When the communication unit receives a predetermined control signal, the power controller controls whether to change the power state to the standby state, according to a result of the detection by the detector.

By the above-described configuration, when the electronic device receives a predetermined control signal from the external apparatus, the electronic device can control whether to change its power state to the standby state, according to whether the movable member is present in the retracted position. With this arrangement, it can be prevented that the movable member is moved to the retracted position as a result of the power state being set to the standby state and the movable member is retracted without user's intention.

According to a second aspect of the present invention, an optical disk reproducing apparatus is provided, which is connectable to a display apparatus and has, as a power state, a standby state in which power is supplied only to part of all circuits for power saving. The optical disk reproducing apparatus includes: a disk tray on which an optical disk is placed or held, and which is provided to be ejectable from and retractable into a body of the optical disk reproducing apparatus and be movable between an ejected position and a retracted position; a driver that drives the disk tray; a first detector that detects whether the disk tray is at the retracted position; a communication unit that receives various control signals from the display apparatus; a power controller that controls a power state of the optical disk reproducing apparatus; and a controller that controls the driver to locate the disk tray at the retracted position When the power state of the optical disk reproducing apparatus is changed to the standby state by the power controller. When the communication unit receives a predetermined control signal, the power controller determines whether to change the power state to the standby state, according to a result of the detection by the first detector.

By the above-described configuration, when the optical disk reproducing apparatus receives a predetermined control signal from the display apparatus, the optical disk reproducing apparatus can control whether to change its power state to the standby state, according to whether the disk tray is present at the retracted position. With this arrangement, it can be prevented that the disk tray is moved to the retracted position as a result of the power state being set to the standby state and the movable member is retracted against user's intention.

The optical disk reproducing apparatus may further include a second detector that detects whether an optical disk is placed or held on the disk tray. When the communication unit receives the predetermined control signal, if it is determined by the first detector that the movable member is at the retracted position, then the power controller may control whether to change the power state of the optical disk reproducing apparatus to the standby state, according to a result of the detection by the second detector. With this arrangement, it can be more reliably prevented that the movable member is retracted against user's intention.

According to a third aspect of the present invention, an optical disk reproducing system is provided which includes a display apparatus, and an optical disk reproducing apparatus connectable to the display apparatus. The display apparatus includes: a first communication unit that communicate various control signals with the optical disk reproducing apparatus; a first receiving unit that receives a video signal from the optical disk reproducing apparatus; a second receiving unit that receives a video signal from a video source which is different from the optical disk reproducing apparatus; a selector that selects one of at least the first and second receiving units and outputs a video signal from the selected receiving unit; a selection controller that controls the selector; and a first transmitting unit that transmits a first control signal to the optical disk reproducing apparatus through the first communication unit when an output selected by the selector is switched from the video signal from the first receiving unit to the video signal from the second receiving unit by the selection controller. The optical disk reproducing apparatus includes: a second communication unit that communicates the various control signals with the display apparatus; a disk tray that is provided to be ejectable from and retractable into a body of the optical disk reproducing apparatus and is movable between an ejected position and a retracted position; a reproducing unit that reproduces a video signal from an optical disk stored in the disk tray and outputs the video signal to the display apparatus; an instruction receiving unit that receives a user instruction to stop a reproduction operation of the reproducing unit or a user instruction to move the disk tray to the ejected position; a detector that detects whether the disk tray is at the retracted position; a power controller that controls a power state of the optical disk reproducing apparatus; and a controller that performs control to locate the disk tray at the retracted position when the power state is changed to the standby state by the power controller. When the power controller of the optical disk reproducing apparatus receives the first control signal from the display apparatus, the power controller of the optical disk reproducing apparatus controls whether to change the power state of the optical disk reproducing apparatus to the standby state, according to a result of the detection by the detector. When the instruction receiving unit receives the instruction to stop the reproduction operation or the instruction to move the disk tray to the ejected position, the controller of the optical disk reproducing apparatus transmits a second control signal to the display apparatus through the second communication unit. When the selection controller of the display apparatus receives the second control signal from the optical disk reproducing apparatus with the first receiving unit being selected by the selector, the selection controller controls the selector to select the second receiving unit.

With the third aspect, when the optical disk reproducing apparatus has the function of transmitting a control signal (second control signal) for instructing to switch video input, to the display apparatus when receiving from the user an instruction to stop the reproduction operation of the optical disk reproducing apparatus or to open the disk tray, and the display apparatus has the function of switching the video input in response to the control signal and transmitting a control signal (first control signal) for controlling the optical disk reproducing apparatus to the standby state, inconvenience where the user wishing to change a disk cannot change the disk can be lessened.

### Effect of the Invention

According to the present invention, when an electronic device (optical disk reproducing apparatus) receives a predetermined control signal from an external apparatus (display apparatus), the electronic device (optical disk reproducing apparatus) can control whether to change its power state to a standby state, according to whether a movable member (disk tray) is present in a retracted position. With this arrangement, it can be prevented that, as a result of changing the power state to the standby state, the movable member is moved to the retracted position and the movable member (disk tray) is retracted without user's intention.

### Brief Description of Drawings

Fig. 1 is a diagram showing a configuration of a display system of embodiments of the present invention.
Fig. 2 is a diagram showing an exemplary configuration of a recorder of a first embodiment.
Fig. 3 is a diagram showing an exemplary configuration of a display apparatus of the first embodiment.
Fig. 4 is a flowchart for describing the operations of the recorder of the first embodiment.
Fig. 5 is a flowchart for describing the operations of a recorder of a second embodiment.

### Mode for Carrying Out the Invention

An embodiment of the present invention will be described below with reference to the accompanying drawings. In the embodiments described below, examples in which the concepts of the present invention are applied to a recorder will be described. Note that the recorder has a standby state for reducing power consumption as a power state, and in the standby state a disk tray is controlled to be disposed in a retracted position.

In a first embodiment, when the recorder obtains a standby signal from a display apparatus, if the disk tray is in a state of being ejected from a recorder body, then the recorder performs control not to place the power state of the recorder in the standby state.

In a second embodiment, when the recorder obtains a standby signal from the display apparatus, the recorder determines whether to place the power state of the recorder in the standby state, according to two conditions: whether the disk tray is retracted in the recorder body and whether a disk is present on the retracted disk tray.

### First Embodiment

### 1 System Configuration

### 1.1 Connection between Recorder and Display Apparatus

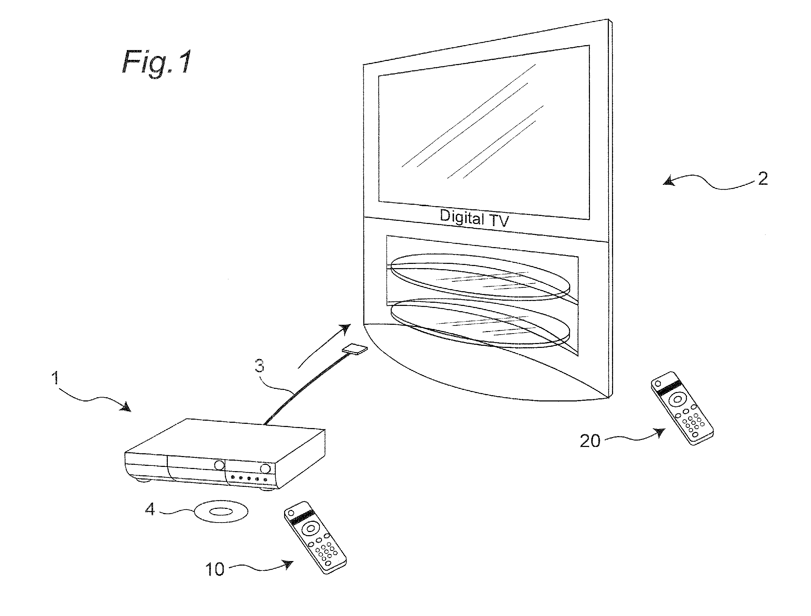

Fig. 1 is a diagram showing a display system configured by a recorder and a display apparatus. A recorder 1 is connected to a display apparatus 2 through an HDMI cable 3. Control signals and video and audio signals are transmitted and received between the recorder 1 and the display apparatus 2 through the HDMI cable 3. Although in the present embodiment exchange of information (transmission and reception of data) between the recorder 1 and the display apparatus 2 is achieved by wired communication using the HDMI cable 3, and so on, the configuration is not limited thereto and the exchange of information may be achieved by wireless communication. The recorder 1 can perform an operation according to an operation signal from a remote control 10, and the display apparatus 2 can perform an operation according to an operation signal from a remote control 20.

The recorder 1 reads a video signal from an optical disk 4 stored therein and outputs the video signal to the display apparatus 2. The display apparatus 2 displays the video signal inputted from the recorder 1.

### 1.2 Configuration of Recorder

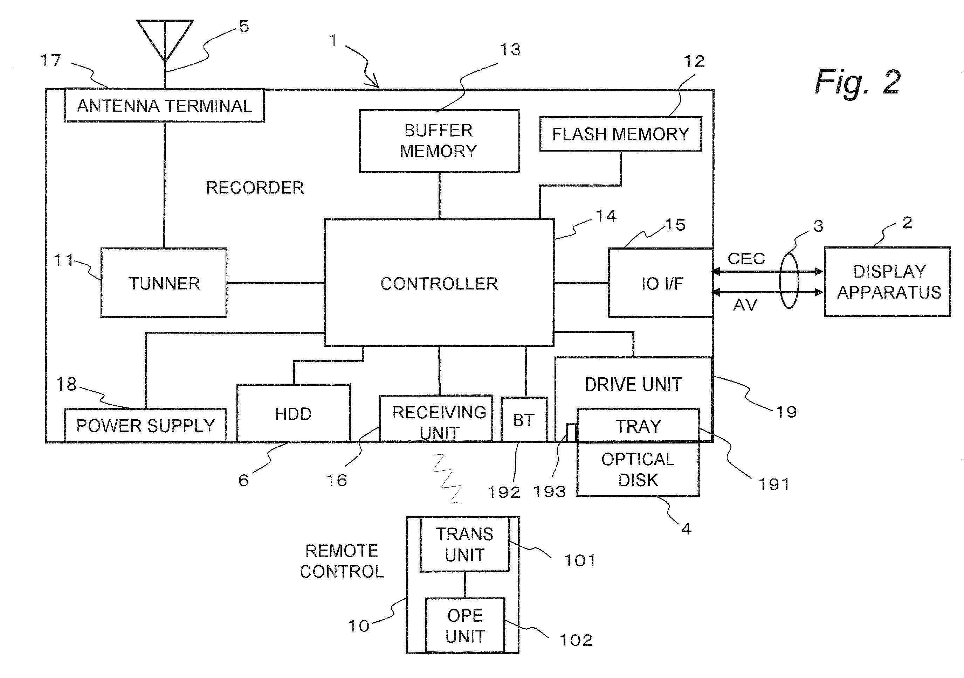

With reference to Fig. 2, a detailed configuration of the recorder 1 will be described. The recorder 1 includes a tuner 11, a flash memory 12, a buffer memory 13, a controller 14, an input/output interface 15, a receiving unit 16, an antenna terminal 17, a power supply 18, and a drive unit 19.

The tuner 11 inputs a broadcast wave received by an antenna 5 through the antenna terminal 17. The tuner 11 transmits a video signal of a specific frequency specified by the controller 14 to the controller 14, so that the controller 14 can record the video signal of the specific frequency included in the broadcast wave on an HD (hard disk) drive 6. Also, the controller 14 can output the video signal of the specific frequency to the display apparatus 2.

The flash memory 12 stores programs to be executed by the controller 14, or the like. The buffer memory 13 is used as a working memory when the controller 14 performs processes. The buffer memory 13 can be, for example, a DRAM.

The input/output interface 15 is an interface that allows a connection between the recorder 1 and the display apparatus 2. The input/output interface 15 allows the exchange of control signals and video signals between the recorder 1 and the display apparatus 2. The input/output interface 15 transmits a signal received from the display apparatus 2 to the controller 14, and transmits a signal received from the controller 14 to the display apparatus 2. Although in the present example the input/output interface 15 performs communication in accordance with HDMI (High Definition Multimedia Interface), the input/output interface 15 may perform communication in accordance with other interface standards as long as the interface standards allow communication of control signals and video signals.

The receiving unit 16 receives an operation signal from the remote control 10 and transmits the operation signal to the controller 14. The receiving unit 16 can be realized by, for example, an infrared ray sensor. The remote control 10 includes a transmitting unit 101 and an operating unit 102. The operating unit 102 includes a plurality of operating members (buttons, a dial, and so on) provided on the exterior of the remote control 10. When any operating member is operated by a user, the operating unit 102 transmits an operation signal corresponding to the operated operating member to the recorder 1 through the transmitting unit 101. With this arrangement, the recorder 1 can recognize the user operation.

The power supply 18 is a power supply that supplies power to each of units in the recorder 1. For example, the power supply 18 supplies power to the controller 14. The controller 14 supplies the power supplied from the power supply 18, to each unit in the recorder 1. The controller 14 supplies the power to some or all of the circuits in the recorder 1, according to the power state. With this arrangement, in the present embodiment, power is not supplied to unnecessary circuits, thus achieving power saving. Power states will be described later.

The drive unit 19 includes a disk tray 191 on which an optical disk 4 is placed or held, and which reads a video signal from the optical disk 4 held in the disk tray 191. The disk tray 191 is movably configured such that the disk tray 191 can take a state of being ejected from a body of the recorder 1 or a state of being retracted in the body of the recorder 1. That is, the disk tray 191 is configured to be ejectable from and retractable into the body of the recorder 1, and can be moved between the ejected position and the retracted position with the optical disk 4 being placed thereon.

The recorder 1 is provided with a tray button 192 that controls the ejection and retraction of the disk tray 191 by a user operation. When the tray button 192 is operated by the user, the disk tray 191 is moved to the ejected position or the retracted position. Specifically, when the tray button 192 is operated by the user, a tray operation signal is outputted to the controller 14. When the controller 14 receives the tray operation signal, the controller 14 outputs a tray operation signal to the drive unit 19. When the disk tray 191 is in the retracted position, the drive unit 19 controls, based on the tray operation signal, a driver (a motor, or the like.) of the disk tray 191 to move the disk tray 191 to the ejected position. On the other hand, when the disk tray 191 is at the ejected position, the drive unit 19 controls the driver of the disk tray 191 to move the disk tray 191 to the retracted position. In this manner, the user can perform the ejection and retraction of the disk tray 191 by operating the tray button 192. Note that the controller 14 is configured to be able to detect information indicating whether the disk tray 191 is at the ejected position or the retracted position. Specifically, the drive unit 19 has a sensor 193 for detecting that the disk tray 191 is retracted. Information detected by the sensor 193 is transmitted to the controller 14 from the drive unit 19 in response to a request signal from the controller 14. With this arrangement, the controller 14 can detect that the disk tray 191 is positioned at the retracted position.

Note that the controller 14 may store information indicating the position of the disk tray 191 in the flash memory 12. With this arrangement, the controller 14 may recognize the position of the disk tray 191 based on the information stored in the flash memory 12. For example, in the case in which the disk tray 191 is present at the ejected position, when the controller 14 receives a tray operation signal from the tray button 192, the controller 14 changes the information indicating the position of the disk tray 191 to information indicating the retracted position and stores the changed information in the flash memory 12. Then, the controller 14 transmits a tray operation signal to the drive unit 19.

When the disk tray 191 is retracted at the retracted position from the ejected position, the drive unit 19 detects whether an optical disk 4 which can be placed on the disk tray 191 is stored. Specifically, the drive unit 19 emits light with an optical pickup on a location where an optical disk is to be present, and detects whether an optical disk is stored according to whether information based on the emitted light can be obtained. Note that whether an optical disk is present in the drive unit 19 can also be detected mechanically instead of electrically. For example, a switch which is depressed when an optical disk is stored may be provided on a spindle mechanism of the drive unit 19.

Note that the drive unit 19 is a technique used in general disk recorders, or the like, and thus various techniques other than the above-described embodiment can also be used.

The controller 14 controls each of units in the recorder 1. In addition, the controller 14 can decode a video signal outputted from the drive unit 19. Furthermore, the controller 14 can perform image processing on the video signal to convert the video signal into a display image which can be displayed on a monitor. The controller 14 may be realized by a microcomputer or a hard-wired circuit. The controller 14 can perform various processes, details of which will be described later.

### 1.3 Configuration of Display Apparatus

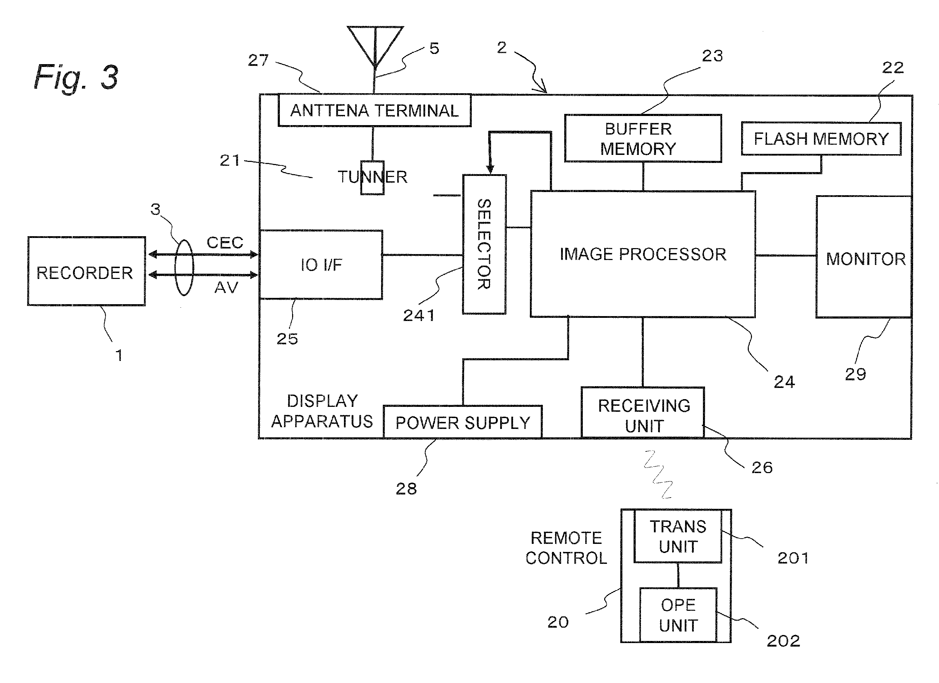

With reference to Fig. 3, a detailed configuration of the display apparatus 2 will be described. The display apparatus 2 includes a tuner 21, a flash memory 22, a buffer memory 23, an image processor 24, an input/output interface 25, a receiving unit 26, an antenna terminal 27, a power supply 28, and a monitor 29.

The tuner 21 inputs a broadcast wave received by an antenna 5 through the antenna terminal 27. The tuner 21 transmits a video signal of a specific frequency specified by the image processor 24 to the image processor 24, so that the image processor 24 can display the video signal of the specific frequency included in the broadcast wave on the monitor 29.

The flash memory 22 stores programs to be executed by the image processor 24, and so on. The buffer memory 23 is used as a working memory when the image processor 24 performs processes. The buffer memory 23 can be, for example, a DRAM.

The input/output interface 25 is an interface that allows a connection between the display apparatus 2 and the recorder 1. The input/output interface 25 allows exchange of control signals and video signals between the image processor 24 of the display apparatus 2 and the controller 14 of the recorder 1, in accordance with HDMI signals. The input/output interface 25 transmits a signal received from the recorder 1 to the image processor 24, and transmits a signal received from the image processor 24 to the recorder 1. The input/output interface 25 includes a plurality of connectors, enabling to establish connections with a plurality of devices.

The receiving unit 26 receives an operation signal from the remote control 20 and transmits the operation signal to the image processor 24. The receiving unit 26 can be realized by, for example, an infrared ray sensor. The remote control 20 includes a transmitting unit 201 and an operating unit 202. The operating unit 202 includes a plurality of operating members (buttons, a dial, and so on) provided on the exterior of the remote control 20. When any operating member is operated by the user, the operating unit 202 transmits an operation signal corresponding to the operated operating member to the display apparatus 2 through the transmitting unit 201. With this arrangement, the display apparatus 2 can recognize the user operation.

The power supply 28 is a power supply that supplies power to each of units in the display apparatus 2. For example, the power supply 28 supplies power to the image processor 24. The image processor 24 supplies the power supplied from the power supply 28, to each unit in the display apparatus 2.

The monitor 29 displays a video signal outputted from the image processor 24. For the monitor 29, for example, a liquid crystal panel display, an organic EL display or plasma display panel display, or the like, can be used.

A selector 241 is an apparatus that switches video inputs, that is, video source, of the display apparatus 2. Specifically, the selector 241 selects either one of a signal inputted from the tuner 21 and a signal inputted from the input/output interface 25 according to control of the image processor 24, and outputs the selected signal to the image processor 24. When the selector 241 selects the input signal from the tuner 21 under control of the image processor 24, video based on a broadcast wave signal received by the tuner 21 can be outputted to the monitor 29 through the image processor 24. On the other hand, when the selector 241 selects the input signal from the input/output interface 25 by the image processor 24, video based on a video signal from the recorder 1 which is received by the input/output interface 25 can be outputted to the monitor 29 through the image processor 24. With this arrangement, video selected by the selector 241 is displayed on the monitor 29.

The image processor 24 controls each unit in the display apparatus 2. The image processor 24 can also decode a video signal outputted from the selector 241. Furthermore, the image processor 24 can perform image processing on the video signal to convert the video signal into a display image displayable on the monitor 29. The image processor 24 may be realized by a microcomputer or a hard-wired circuit.

### 2. Power State

### 2.1 Power State of Recorder

The power state of the recorder 1 will be described. The recorder 1 of the present embodiment has three types of power states, a "power ON state", a "standby state (partial OFF of power supply)", and a "power OFF state (no power supply)".

The "power ON state" is a state in which power is supplied to each of units in the recorder 1. For example, in the "power ON state", power may be supplied to at least functional units that achieve main functions of the recorder 1.

The "power OFF state" is a state in which no power is supplied from the power supply 18. For example, in case where the power supply 18 obtains power from a commercial power source, the "power OFF state" is a state in which power cannot be obtained from the commercial power source. That is, it is a state in which a power cable of the recorder 1 is unplugged, or the like.

The "standby state" is a state in which power is supplied to a part of the controller 14. In the "standby state", the circuits to which power is supplied are changed according to the setting of the recorder 1. For example, when a program recording is set, the recorder 1 supplies power to the tuner 11, the controller 14, the HD drive 6, and so on, to record a program for which the program recording is set. Alternatively, when the recorder 1 is set to a mode in which the recorder 1 can more rapidly return to the power ON state from the standby state, the recorder 1 supplies power to the controller 14. With this arrangement, when the power state is changed from standby to ON, the recorder 1 can return to the "power ON state" in a shorter time. When no particular settings are made such as those described above, the recorder 1 supplies power to a functional unit other than function units that achieve the main functions, such as the receiving unit 16. In the "standby state", the disk tray 191 is controlled to be located at the retracted position. Namely, during the "standby state", the disk tray 191 of the drive unit 19 cannot be ejected or retracted.

Therefore, in the present embodiment, when the power state is changed from the "power ON state" to the "standby state" with the disk tray 191 located at the ejected position, the controller 14 provides an instruction to the drive unit 19 to control the disk tray 191 to move to the retracted position.

### 2.2 Power State of Display Apparatus

The power state of the display apparatus 2 will be described. The display apparatus 2 of the present embodiment has three types of power states, a "TV power ON state", "TV standby (partial OFF of power supply)", and "TV power OFF (no power supply)".

The "TV power ON state" is a state in which power is supplied to each of units in the display apparatus 2. For example, in the "power ON state", power may be supplied to at least functional units that achieve main functions of the display apparatus 2.

The "TV power OFF" is a state in which no power is supplied from the power supply 28. For example, in case where the power supply 28 obtains power from a commercial power source, the "TV power OFF" is a state in which power cannot be obtained from the commercial power source. That is, it is a state in which a power cable of the display apparatus 2 is unplugged, or the like.

The "TV standby state" is a state in which power is supplied to a part of the image processor 24. In the TV standby state, the display apparatus 2 supplies power to a functional unit, such as, the receiving unit 26, other than the functional units that achieve the main functions thereof.

### 3 Control Signals (CEC) communicated between Recorder and Display Apparatus

Examples of control signals (CEC) communicated through the HDMI cable 3 will be described. A TV input switching signal (video source switching signal) which is transmitted to the display apparatus 2 from the recorder 1, and a "standby (unicast)" signal and a "standby (broadcast)" signal which are transmitted to the recorder 1 from the display apparatus 2 will be described below.

### 3.1 For TV Input Switching Signal (Video Source Switching signal)

The recorder 1 reads a video signal from the optical disk 4 stored in the drive unit 19 and outputs the video signal to the display apparatus 2 (optical disk reproduction operation). When a user makes an operation to stop the optical disk reproduction operation, i.e., an operation signal for stopping the optical disk reproduction operation is received from the remote control 10, during the optical disk reproduction operation, the recorder 1 transmits a TV input switching signal to the display apparatus 2. Note that, even after the TV input switching signal is transmitted to the display apparatus 2, the power state of the recorder 1 remains in the power ON state".

When the display apparatus 2 receives the TV input switching signal from the recorder 1, the display apparatus 2 switches an input video signal output to the image processor 24 from a video signal input via the HDMI cable 3 (a video signal input from the input/output interface 25) to a video signal input from the tuner 21. That is, when the image processor 24 receives the TV input switching signal from the recorder 1, the image processor 24 controls the selector 241 to output a video signal from the tuner 21 to the image processor 24.

In the above-described example, when a user makes an operation to stop the optical disk reproduction operation, a TV input switching signal is outputted to the display apparatus 2. However, the recorder 1 may output a TV input switching signal to the display apparatus 2 when a user makes an operation to open the disk tray 191 of the recorder 1 (i.e., to move the disk tray 191 to the ejected position).

### 3.2 For Standby (Unicast) Signal

When the input from the tuner 21 has continued for a predetermined period of time after switching the input to the image processor 24 from an input via the HDMI cable 3 (an input from the input/output interface 25) to an input from the tuner 21 in response to the received TV input switching signal, the display apparatus 2 transmits a "standby (unicast)" signal to the recorder 1.

The standby (unicast) signal is a signal for setting power state of a device connected to a specific HDMI terminal in a standby state. In the present example, the specific HDMI terminal is an HDMI terminal to which the recorder 1 is connected, and a standby (unicast) signal is transmitted to the recorder 1. The reason for configuring in this manner is to reduce the power consumption of the recorder 1. That is, the fact that the input from the tuner 21 has continued for the predetermined period of time indicates that a video signal is not inputted to the display apparatus 2 from the recorder 1 (i.e., via the HDMI cable 3). Thus, it can be considered that it is highly likely that there is no longer need to turn on the power of the recorder 1. Hence, in the present embodiment, the display apparatus 2 is configured such that, when switching from the input via the HDMI cable 3 to the input from the tuner 21 is performed, a standby (unicast) signal is transmitted to the recorder 1.

Here, the standby (unicast) signal includes information (destination address) on destination of a control signal to be transmitted. Since the control signal is transmitted in unicast, the address of one of the plurality of connectors included in the input/output interface 25 is specified as the destination of the control signal. That is, in the standby (unicast) signal, a destination address for unicast is specified. Note that, the input/output interface 25 performs communication in accordance with HDMI, and thus the controller 14 can identify a connector that has received the TV input switching signal.

The recorder 1 performs operations as described later, in response to the received standby (unicast) signal.

### 3.3 For Standby (Broadcast) Signal

In the display apparatus 2, the power state of the display apparatus 2 is changed from the "TV power ON state" to the "TV standby state" in response to an operation performed by the user (in response to an operation signal from the remote control 20). When the power state of the display apparatus 2 is changed from the "TV power ON state" to the "TV standby state", the display apparatus 2 transmits a standby (broadcast) signal to all of the devices connected to the input/output interface 25. The reason for configuring in this manner is to save user's burden. When the user purposefully changes the power state of the display apparatus 2 to the standby state, in many cases, it is considered that there is no need to maintain the power states of all of the devices connected to the display apparatus 2 such as the recorder 1, in the ON state. Hence, in the present embodiment, when the power state of the display apparatus 2 is changed to the standby state, a standby (broadcast) signal is transmitted (broadcasted) to the recorder 1, and so on.

Here, the standby (broadcast) signal includes information (destination addresses) on destinations of a control signal to be transmitted. Since the control signal is broadcasted, addresses indicating all of the plurality of connectors included in the input/output interface 25 are specified as the destinations of the control signal. That is, when a plurality of devices are connected to the display apparatus 2 through the input/output interface 25, the display apparatus 2 transmits a standby (broadcast) signal to each of the plurality of devices. Therefore, the display apparatus 2 transmits a standby (broadcast) signal to the recorder 1, too. Note that in the standby (broadcast) signal, destination addresses for broadcast are specified and included.

Note that the recorder 1 performs operations as described later in response to the received standby (broadcast) signal.

### 4 Operations of Recorder upon receiving Standby Signal

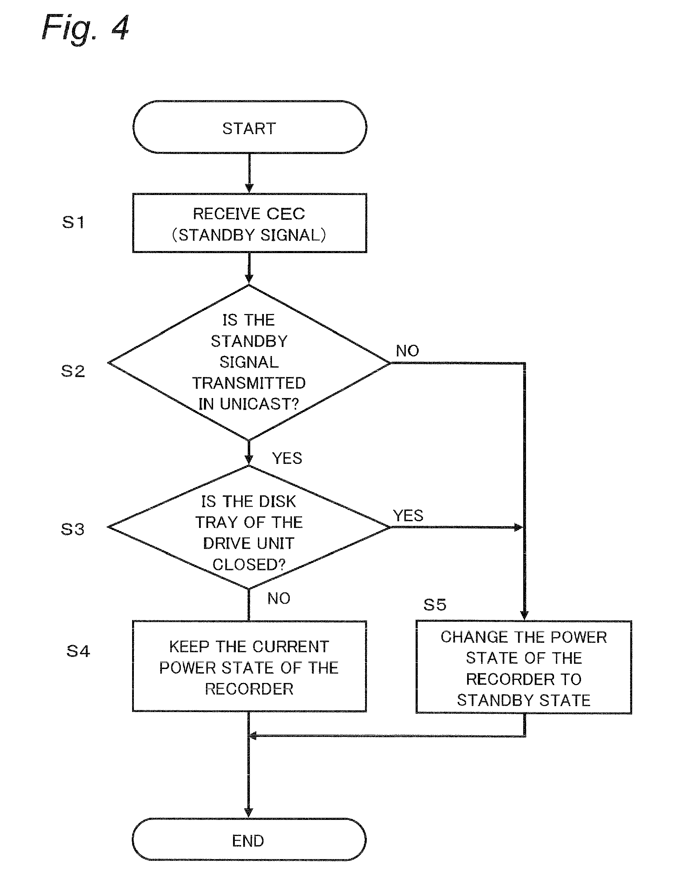

With reference to a flowchart in Fig. 4, the operations of the recorder 1 (controller 14) will be described which are performed when a standby signal is received when the power state of the recorder 1 is the "power ON state".

When the controller 14 receives a standby signal (S1), the controller 14 determines whether the standby signal is transmitted in unicast (S2). Specifically, the controller 14 checks a destination address of the standby signal to determine whether the standby signal is transmitted in unicast.

When the standby signal is not transmitted in unicast (i.e., when the standby signal is broadcasted), the controller 14 changes the power state of the recorder 1 to the standby state (S5). Note that the reason for changing the power state of the recorder 1 to the standby state when the standby signal is broadcasted is as follows.

The timing at which a standby (broadcast) signal is transmitted from the display apparatus 2 is a timing at which the power state of the display apparatus 2 is set to the "TV standby state" by a user operation. That is, it can be considered that the user has finished viewing video on the display apparatus 2 and thus the user is less likely to perform further operation on the recorder 1 (particularly, the disk tray 191). Hence, it is considered that, even if the recorder 1 is changed to the standby state and the disk tray 191 is moved to the retracted position from the ejected position, there is no influence on user convenience. Thus, in the present embodiment, when the recorder 1 receives a standby (broadcast) signal, the recorder 1 changes its power state to the "standby state", regardless of whether the disk tray 191 is ejected (open). Thereafter, the controller 14 stops supply of power to each unit in the recorder 1.

On the other hand, wehn in step S2 the standby signal is transmitted in unicast, the controller 14 determines whether the disk tray 191 is present in the retracted position (S3). That is, the controller 14 determines whether the disk tray 191 is in a closed state. Specifically, the controller 14 determines whether the disk tray 191 is present in the retracted position, using the sensor provided in the drive unit 19.

When the disk tray 191 is present in the retracted position, then the controller 14 changes the power state of the recorder 1 to the standby state (S5).

When the disk tray 191 is not present in the retracted position (NO in S3), then the controller 14 does not change the power state of the recorder 1 (S4). Namely, the current power state of the recorder 1 is maintained as it is. Therefore, when the disk tray 191 is present in the ejected position (when the disk tray 191 is in the open state), the recorder 1 sets its power state in the standby state so that the disk tray 191 is not retracted. With this arrangement, it can be prevented that the disk tray 191 is forcefully retracted by the recorder 1 during user's changing of an optical disk and a user's unintended situation occurs. Thus, an unfavorable situation for the user can be prevented from occurring.

### 5. Summary

The recorder 1 of the present embodiment is connectable to the display apparatus 2. The recorder 1 includes the disk tray 191 that is provided to be ejectable from and retractable into the body of the recorder 1 and be movable between an ejected position and a retracted position; the controller 14 that detects whether the disk tray 191 is present in the retracted position; the controller 14 that receives a standby (unicast) signal from the display apparatus 2; the controller 14 that controls a power state; and the controller 14 that controls the disk tray 191 to be located in the retracted position when the power state is changed to a "standby state". When the controller 14 receives a standby (unicast) signal, the controller 14 controls whether to change the power state to the "standby state", according to whether the disk tray 191 is present in the retracted position.

With this arrangement, user's unintended retracting of the disk tray 191 can be prevented, that is caused by the disk tray 191 moving to the retracted position when a standby (unicast) signal is received from the display apparatus 2 .

### Second Embodiment

In a second embodiment, only those points that differ from the first embodiment will be described and descriptions of the same configurations as those in the first embodiment are omitted. In the second embodiment, the system configuration is the same as that in the first embodiment. In the following, another example of the operations of a recorder 1 performed when a standby signal is received will be described.

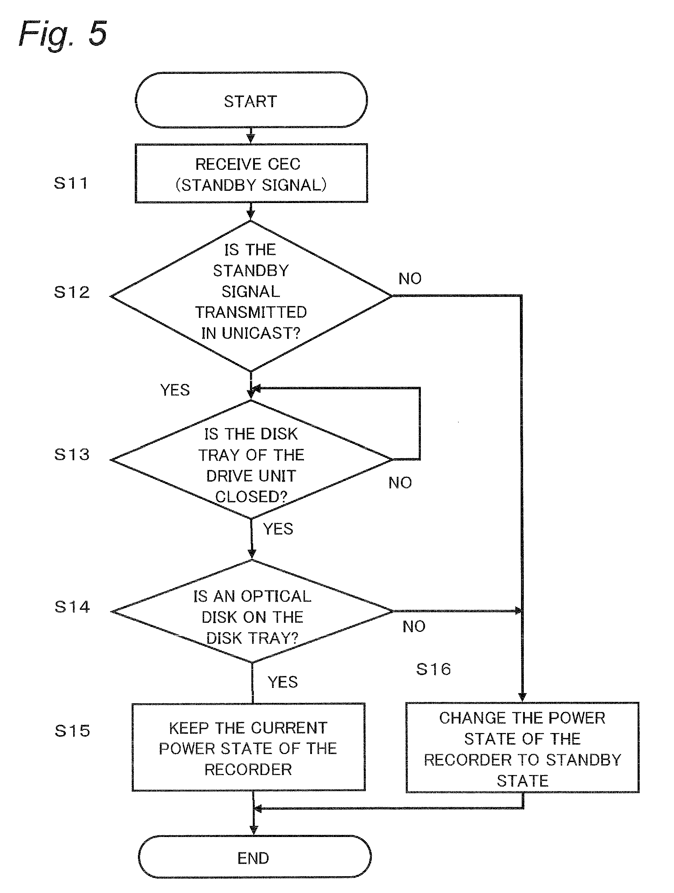

Fig. 5 is a flowchart showing the operations of the recorder 1 performed when a standby signal is received in the present embodiment.

The operations in steps S11 and S12 in the second embodiment are the same as those in steps S1 and S2 in Fig. 4 in the first embodiment. In the present embodiment, the operations at step S13 and the following steps differ from those in the first embodiment. The operations at step S13 and the following steps will be described below.

A controller 14 determines whether a disk tray 191 is present in the retracted position (S13). Namely, the controller 14 determines whether the disk tray 191 is in the closed state. If the controller 14 determines that the disk tray 191 is not present in the retracted position, then the controller 14 waits until the disk tray 191 is moved to the retracted position (NO in S13). Namely, the controller 14 waits for the disk tray 191 to be retracted in the retracted position by user's operating a tray button 192. With this arrangement, retracting of the disk tray 191 can be prevented despite the user not intending to do so.

If the disk tray 191 is retracted in the retracted position (YES in S13), then the controller 14 determines whether an optical disk 4 is stored in a drive unit 19 (S14).

If the optical disk 4 is not stored in the drive unit 19, then the controller 14 changes the power state of the recorder 1 to the standby state (S16).

On the other hand, if the optical disk is retracted in the drive unit 19, then the controller 14 does not change the power state of the recorder 1 (S15). Namely, the current power state of the recorder 1 is kept as it is. It is considered that, in a situation in which an optical disk is stored in the drive unit 19, the optical disk is highly likely to be reproduced soon by the user. Thus, as in the present embodiment, when an optical disk is stored in the drive unit 19, by maintaining the power ON state of the recorder 1, the controller 14 can start reproduction of the optical disk promptly when a reproduction instruction is provided from the user, enabling to improve user convenience.

The recorder 1 of the present embodiment is a recorder that is connectable to a display apparatus 2 and that has, as a power state, a standby state in which power is supplied only to a part of all circuits for power saving. The recorder 1 includes the disk tray 191 that is provided to be ejectable from and retractable into an apparatus body and be movable between an ejected position and a retracted position; the drive unit 19 that drives the disk tray 191; a sensor 193 that detects whether the disk tray 191 is in the retracted position; an input/output interface 15 that receives various control signals from the display apparatus 2; and the controller 14 that controls the power state of the recorder 1 and controls the drive unit 19 to locate the disk tray 191 at the retracted position when the power state of the recorder 1 is changed to the standby state. When the input/output interface 15 receives a standby (unicast) signal, the controller 14 determines whether to change the power state to the standby state, according to a result of the detection by the sensor 193.

By the above-described configuration, the recorder 1 can achieve a reduction in power consumption while preventing unintended retracting of the disk tray 191, and can further achieve a prompt start of an optical disk reproduction operation.

### (Term correspondence)

The recorder 1 is an example of an electronic device connectable to an external apparatus and an optical disk reproducing apparatus connectable to a display apparatus, and the display apparatus 2 is an example of an external apparatus. The disk tray 191 is an example of a movable member. The sensor 193 is an example of a detector. The controller 14 is an example of a power controller and a controller. The receiving unit 16 is an example of an instruction receiving unit. A standby (unicast)" signal is an example of a predetermined control signal and a first control signal. A TV input switching signal is an example of a second control signal.

### Other Embodiments

Although the above-described embodiments are shown as specific embodiments of the present invention, the present invention is not limited thereto. For example, the following embodiments are also considered.

Although the above-described embodiment is described in which the present invention is applied to the recorder 1 capable of recording and reproducing video data on an optical disk, the application is not limited thereto. The cencept of the present invention can also be applied to a player capable of performing only reproduction of video data from an optical disk.

In the above-described embodiment, the controller 14 is realized by a single IC. However, the configuration is not limited thereto and the controller 14 may be realized by a plurality of ICs. Note that the image processor 24 may also be similarly realized by a plurality of ICs.

In the above-described embodiments, three types of power states are set as power states. However, more types of power states may be set.

Namely, the present invention can be applied not only to the above-described embodiment but also to various embodiments.

### Industrial Applicability

The present invention can be applied to an electronic device connectable to an external apparatus and capable of receiving control signals from the external apparatus, e.g., an optical disk reproducing apparatus and an optical disk recording apparatus which are connectable to a display apparatus.

### Reference Signs

- 1:: RECORDER
- 2:: DISPLAY APPARATUS
- 3:: HDMI CABLE
- 4:: OPTICAL DISK
- 5:: ANTENNA
- 6:: HD DRIVE
- 10: and 20: REMOTE CONTROL
- 11:: TUNER
- 12:: FLASH MEMORY
- 13:: BUFFER MEMORY
- 14:: CONTROLLER
- 15:: INPUT/OUTPUT INTERFACE
- 16:: RECEIVING UNIT
- 17:: ANTENNA TERMINAL
- 18:: POWER SUPPLY
- 19:: DRIVE APPARATUS
- 21:: TUNER
- 22:: FLASK MEMORY
- 23:: BUFFER MEMORY
- 24:: IMAGE PROCESSOR
- 241:: SELECTOR
- 25:: INPUT/OUTPUT INTERFACE
- 26:: RECEIVING UNIT
- 27:: ANTENNA TERMINAL
- 28:: POWER SUPPLY
- 29:: MONITOR
- 191:: DISK TRAY
- 192:: TRAY BUTTON

## Claims

1. An electronic device connectable to an external apparatus and having, as a power state, a standby state in which power is supplied only to part of all circuits for power saving, the electronic device comprising:
a movable member that is provided to be ejectable from and retractable into a body of the electronic device and be movable between an ejected position and a retracted position;
a driver that drives the movable member;
a detector that detects whether the movable member is at the retracted position;
a communication unit that receives various control signals from the external apparatus;
a power controller that controls a power state of the electric device; and
a controller that controls the driver to locate the movable member at the retracted position when the power state of the electronic device is changed to the standby state by the power controller, wherein
when the communication unit receives a predetermined control signal, the power controller controls whether to change the power state to the standby state, according to a result of the detection by the detector.

2. The electronic device according to claim 1, wherein
when the communication unit receives the predetermined control signal, the power controller
changes the power state to the standby state if the movable member is at the retracted position, and
keeps the current power state if the movable member is not at the retracted position.

3. The electronic device according to claim 1, wherein the predetermined control signal is a signal transmitted in unicast.

4. The electronic device according to claim 1, further comprising an instruction receiving unit that receives user instructions, wherein
when the instruction receiving unit receives an instruction to move the movable unit to the ejected position,
the controller transmits a control signal for instructing to switching input of the external apparatus, to the external apparatus, and thereafter
the communication unit receives the predetermined control signal from the external apparatus.

5. An optical disk reproducing apparatus connectable to a display apparatus and having, as a power state, a standby state in which power is supplied only to part of all circuits for power saving, the optical disk reproducing apparatus comprising:
a disk tray on which an optical disk is placed or held, and which is provided to be ejectable from and retractable into a body of the optical disk reproducing apparatus and be movable between an ejected position and a retracted position;
a driver that drives the disk tray;
a first detector that detects whether the disk tray is at the retracted position;
a communication unit that receives various control signals from the display apparatus;
a power controller that controls a power state of the optical disk reproducing apparatus; and
a controller that controls the driver to locate the disk tray at the retracted position when the power state of the optical disk reproducing apparatus is changed to the standby state by the power controller, wherein
when the communication unit receives a predetermined control signals, the power controller determines whether to change the power state to the standby state, according to a result of the detection by the first detector.

6. The optical disk reproducing apparatus according to claim 5, further comprising a second detector that detects whether an optical disk is placed or held on the disk tray, wherein
when the communication unit receives the predetermined control signal, if it is determined by the first detector that the movable member is at the retracted position, then the power controller controls whether to change the power state of the optical disk reproducing apparatus to the standby state, according to a result of the detection by the second detector.

7. The optical disk reproducing apparatus according to claim 5, wherein the predetermined control signal is a signal transmitted in unicast.

8. The optical disk reproducing apparatus according to claim 5, further comprising an instruction receiving unit that receives user instructions, wherein
when the instruction receiving unit receives an instruction to move the disk tray to the ejected position,
the controller transmits a control signal for instructing to switch video input of the display apparatus, to the display apparatus, and thereafter
the communication unit receives the predetermined control signal from the display apparatus.

9. An optical disk reproducing system comprising:
a display apparatus; and
an optical disk reproducing apparatus connectable to the display apparatus,
wherein the display apparatus comprises:
a first communication unit that communicate various control signals with the optical disk reproducing apparatus;
a first receiving unit that receives a video signal from the optical disk reproducing apparatus;
a second receiving unit that receives a video signal from a video source which is different from the optical disk reproducing apparatus;
a selector that selects one of at least the first and second receiving units and outputs a video signal from the selected receiving unit;
a selection controller that controls the selector; and
a first transmitting unit that transmits a first control signal to the optical disk reproducing apparatus through the first communication unit when an output selected by the selector is switched from the video signal from the first receiving unit to the video signal from the second receiving unit by the selection controller,
the optical disk reproducing apparatus comprises:
a second communication unit that communicates the various control signals with the display apparatus;
a disk tray that is provided to be ejectable from and retractable into a body of the optical disk reproducing apparatus and is movable between an ejected position and a retracted position;
a reproducing unit that reproduces a video signal from an optical disk stored in the disk tray and outputs the video signal to the display apparatus;
an instruction receiving unit that receives a user instruction to stop a reproduction operation of the reproducing unit or a user instruction to move the disk tray to the ejected position;
a detector that detects whether the disk tray is at the retracted position;
a power controller that controls a power state of the optical disk reproducing apparatus; and
a controller that performs control to locate the disk tray at the retracted position when the power state is changed to the standby state by the power controller, and
when the power controller of the optical disk reproducing apparatus receives the first control signal from the display apparatus, the power controller of the optical disk reproducing apparatus controls whether to change the power state of the optical disk reproducing apparatus to the standby state, according to a result of the detection by the detector,
when the instruction receiving unit receives the instruction to stop the reproduction operation or the instruction to move the disk tray to the ejected position, the controller of the optical disk reproducing apparatus transmits a second control signal to the display apparatus through the second communication unit, and
when the selection controller of the display apparatus receives the second control signal from the optical disk reproducing apparatus with the first receiving unit being selected by the selector, the selection controller controls the selector to select the second receiving unit.

10. The optical disk reproducing system according to claim 9, wherein the first control signal is a signal transmitted in unicast.
